(19) Europäisches Patentamt
European Patent Office
Office européen des brevets

(11) **EP 3 276 591 A1**

(12) **DEMANDE DE BREVET EUROPEEN**

(43) Date de publication:
**31.01.2018 Bulletin 2018/05**

(51) Int Cl.:
*G08G 5/00* (2006.01)          *B64C 39/02* (2006.01)
*G05D 1/00* (2006.01)          *G05D 1/10* (2006.01)
*G08G 5/04* (2006.01)

(21) Numéro de dépôt: **17182241.4**

(22) Date de dépôt: **20.07.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **27.07.2016 FR 1657200**

(71) Demandeur: **Parrot Drones**
**75010 Paris (FR)**

(72) Inventeur: **LINE, Martin**
**75015 Paris (FR)**

(74) Mandataire: **Dupuis-Latour, Dominique et al**
**Bardehle Pagenberg**
**10, boulevard Haussmann**
**75009 Paris (FR)**

(54) **DRONE AYANT UN SYSTEME D'EVITEMENT D'OBSTACLES**

(57) L'invention concerne un drone à voilure tournante (10) comprenant un corps de drone (16) comprenant une carte électronique contrôlant le pilotage du drone et une pluralité de bras de liaison, une pluralité de blocs propulseurs (12) montés sur des bras de liaison (18) respectifs, au moins un capteur d'obstacles (14) solidaire du corps de drone, dont la direction principale de détection est située dans un plan sensiblement horizontal. Le drone comprend des moyens de correction (40) de l'orientation du drone aptes à corriger en lacet l'orientation du drone en vol de sorte à maintenir un dudit au moins un capteur d'obstacles dans la direction de déplacement du drone.

Figure 1

EP 3 276 591 A1

# Description

L'invention concerne les engins volants motorisés tels que les drones, notamment les drones à voilure tournante de type quadricoptère.

*L'AR.Drone 2.0* ou le *Bebop Drone* de Parrot SA, Paris, France sont des exemples typiques de tels quadricoptères. Ils sont équipés d'une série de capteurs (accéléromètres, gyromètres 3 axes, altimètre) comprennent un bloc caméra. Ces drones sont pourvus de plusieurs rotors entrainés par des moteurs respectifs aptes à être commandés de manière différenciée afin de piloter le drone en attitude et en vitesse. Ces drones peuvent comprendre au moins un bloc caméra vidéo captant une image de la scène vers laquelle est dirigé le drone.

Il est connu des drones équipés d'un système détecteur d'obstacles et d'évitement autonome des obstacles. Pour ce faire, le système de détection et l'évitement d'obstacles est composé de deux capteurs optiques positionnés sur la face avant du drone, la face avant étant définie par la face de direction normale de déplacement vers l'avant du drone. En outre, le drone comprend un logiciel d'analyse d'images en vue de détecter des obstacles et qui immobilise le drone s'il apparait que le passage est bloqué. Si l'obstacle peut être contourné, alors le drone choisit un nouveau chemin.

Toutefois, ce drone est uniquement capable de détecter et éviter un obstacle situé devant la face avant du drone. En effet, si l'obstacle est de biais, le système ne permet pas une bonne détection de l'objet. Il en est de même concernant les obstacles situés au-dessus ou en dessous du drone, ces obstacles ne seront pas détectés.

Ces drones peuvent être en particulier pilotés par un utilisateur via un dispositif de pilotage. En outre, il est connu des drones ayant un mode de fonctionnement autonome de sorte que le drone est apte à suivre un objet cible à filmer. Le drone suivant l'objet cible ajuste sa position et/ou la position du bloc caméra afin que l'objet cible soit toujours filmé par le drone. Le drone étant autonome, c'est-à-dire le déplacement est calculé par le drone et non piloté par un utilisateur, il détermine sa trajectoire en fonction des mouvements de l'objet cible et commande le bloc caméra afin que celui-ci soit toujours en direction de l'objet cible à filmer.

Le système détecteur d'obstacles étant positionné sur la face avant du drone, celui-ci ne peut donc détecter que les obstacles situés dans le champ de vision des capteurs optiques, c'est-à-dire les obstacles situés à l'avant du drone. Ainsi, dans le cas de la mise en oeuvre du suivi d'un objet cible, le drone est contraint de suivre l'objet cible en restant derrière cet objet afin de permettre une analyse des images frontales du drone. Cette solution limite donc le mode de suivi et de capture d'une vidéo de l'objet cible. En effet, les mouvements latéraux et de recul du drone ne permettent pas l'évitement d'obstacles.

Une solution permettant de résoudre ce problème consiste à équiper le drone d'une pluralité de systèmes de détection et l'évitement d'obstacles autour du corps du drone afin de permettre une analyse pour l'évitement d'obstacles tout autour du drone. Une telle solution permet un déplacement du drone latéralement et un mouvement de recul du drone. Toutefois, cette solution présente l'inconvénient d'être très onéreuse puisqu'elle nécessite la présence d'une multitude de systèmes de détection et l'évitement d'obstacles de sorte à analyser l'environnement de vol du drone tout autour du drone.

Le but de l'invention est de remédier à ces divers inconvénients, en proposant un drone muni d'au moins un capteur d'obstacles solidaire du corps de drone, ledit au moins un capteur d'obstacles ayant une direction principale de détection située dans un plan sensiblement horizontal et de moyens spécifiques corrigeant l'attitude du drone de sorte que le capteur d'obstacles puisse toujours analyser l'environnement de vol dans la direction de déplacement du drone et donc éviter les obstacles lors du déplacement du drone. De plus, un tel mode de réalisation permet d'optimiser le nombre de capteurs d'obstacles sur le drone et incidemment le coût du drone.

A cet effet, l'invention propose un drone à voilure tournante comprenant un corps de drone comprenant une carte électronique contrôlant le pilotage du drone et une pluralité de bras de liaison, une pluralité de blocs propulseurs montés sur des bras de liaison respectifs, au moins un capteur d'obstacles solidaire du corps de drone dont la direction principale de détection est située dans un plan sensiblement horizontal.

De façon caractéristique, le drone comprend des moyens de correction de l'orientation du drone aptes à corriger en lacet l'orientation du drone en vol de sorte à maintenir un dudit au moins un capteur d'obstacles dans la direction de déplacement du drone.

Selon diverses caractéristiques subsidiaires, prises ensemble ou isolément :

- les moyens de correction de l'orientation du drone comprennent :

    ◦ des moyens de détermination d'une coordonnée angulaire définie entre une direction de déplacement du drone et une direction du capteur d'obstacles et
    ◦ des moyens d'actions correctrices aptes à commander en rotation le drone selon l'axe de lacet dudit drone, la rotation étant fonction de la coordonnée angulaire déterminée, permettant d'aligner la direction du capteur d'obstacles sur la direction de déplacement du drone.

- les moyens d'actions correctrices comprennent en outre des moyens aptes à agir en rotation selon l'axe de roulis et/ou selon l'axe de tangage afin de maintenir la direction du capteur d'obstacles dans la direction de déplacement du drone.
- les moyens de détermination d'une coordonnée angulaire comprennent des moyens de détection de la direction de déplacement du drone et des moyens de détection de la direction du capteur d'obstacles.

- les moyens de détection de la direction de déplacement du drone sont aptes à déterminer l'angle déterminant la direction de déplacement du drone $\psi_{ref}$ dans le repère terrestre (NED) ou l'angle déterminant une direction commandée de déplacement du drone $\psi_{refcmd}$ dans le repère terrestre (NED), ladite direction commandée étant déterminée à partir d'une commande de pilotage reçue par le drone.
- les moyens de détection de la direction du capteur d'obstacles sont aptes à déterminer l'angle déterminant la direction du capteur d'obstacles $\psi$ dans le repère terrestre (NED).
- les moyens de détermination de ladite coordonnée angulaire comprennent un moyen de soustraction de l'angle déterminant le déplacement du drone ou l'angle déterminant la direction commandée de déplacement du drone et de l'angle déterminant la direction du capteur d'obstacles.
- le drone comprend en outre un support mobile monté sur le corps de drone comprenant une caméra apte à capter une séquence d'images et des moyens de correction inverse de l'orientation du support mobile aptes à corriger en lacet l'orientation du support de sorte à maintenir la caméra dans sa direction de visée .
- les moyens de correction inverse de l'orientation du drone comprennent des moyens d'actions sur le support mobile aptes à commander en rotation le support mobile selon la coordonnée angulaire inverse déterminée permettant de maintenir la direction de la caméra dans sa direction de visée.

L'invention concerne également un procédé de contrôle dynamique d'attitude d'un drone à voilure tournante comprenant un corps de drone, une pluralité de bras de liaison, une pluralité de blocs propulseurs montés sur des bras de liaison respectifs et au moins un capteur d'obstacles solidaire du corps de drone dont la direction principale de détection est située dans un plan sensiblement horizontal.

De façon caractéristique, lorsque le drone vole, l'attitude du drone est contrôlée par l'envoi de commandes de correction de l'orientation du drone à un ou plusieurs desdits blocs propulseurs pour corriger en lacet l'orientation du drone en vol de sorte à maintenir un dudit au moins un capteur d'obstacles dans la direction de déplacement du drone.

Selon un mode de réalisation particulier, le procédé comprend :

- une étape de détermination d'une coordonnée angulaire définie entre une direction de déplacement du drone et une direction du capteur d'obstacles et
- une étape d'envoi de commande en rotation du drone selon l'axe de lacet dudit drone, la rotation étant fonction de la coordonnée angulaire déterminée, permettant d'aligner la direction du capteur d'obstacles sur la direction de déplacement du drone.

Selon un autre mode de réalisation, le procédé comprend en outre une étape de détection de la direction de déplacement du drone et une étape de détection de la direction du capteur d'obstacles.

Selon encore un autre mode de réalisation, ladite coordonnée angulaire est obtenue à partir de la direction de déplacement du drone et de la direction du capteur d'obstacles.

Selon un mode de réalisation particulier, le drone comprend en outre un support mobile monté sur le corps de drone comprenant une caméra apte à capter une séquence d'images depuis le drone et le procédé comprend en outre une étape de correction inverse de l'orientation du support mobile pour corriger en lacet l'orientation du support de sorte à maintenir la caméra dans sa direction de visée.

On va maintenant décrire un exemple de mise en oeuvre de la présente invention, en référence aux dessins annexés où les mêmes références désignent d'une figure à l'autre des éléments identiques ou fonctionnellement semblables.

La Figure 1 est une vue d'ensemble montrant le drone conformément à l'invention.

Les Figures 2a, 2b et 2c sont des vues illustrant la correction de l'orientation du drone selon l'invention.

La Figure 3 est un schéma illustrant la détermination d'une coordonnée angulaire.

La Figure 4 une vue détaillée des moyens de correction de l'orientation du drone conformément à l'invention.

La Figure 5 illustre un organigramme de correction de l'orientation du drone conformément à l'invention

La Figure 6 illustre un autre organigramme de correction de l'orientation du drone conformément à l'invention.

On va maintenant décrire un exemple de réalisation et de mise en oeuvre de l'invention.

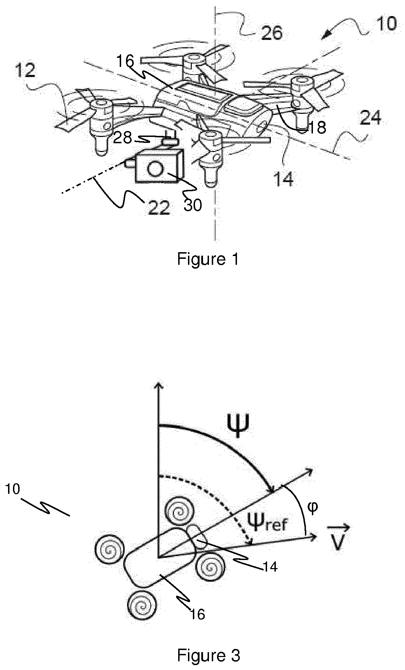

Sur la Figure 1, la référence 10 désigne de façon générale un drone, qui est par exemple un quadricoptère tel que le modèle *Bebop Drone* de Parrot SA, Paris, France. Ce drone comporte un corps de drone 16 à partir duquel rayonnent quatre bras de liaison 18. Quatre blocs propulseurs 12 de type rotors coplanaires dont les moteurs sont pilotés indépendamment par un système intégré de navigation et de contrôle d'attitude sont fixés respectivement sur les quatre bras liaison.

Le corps de drone 16 comprend une carte électronique contrôlant le pilotage du drone.

Conformément à l'invention, le drone comprend par exemple sur le corps de drone, au moins un capteur d'obstacles 14 solidaire directement ou indirectement du corps de drone, dont la direction principale de détection est située dans un plan sensiblement horizontal.

Selon un mode de réalisation particulier, au moins un capteur d'obstacles est positionné sur une face du drone notamment sur une face verticale du drone, de sorte que la direction principale de détection dudit au moins un capteur d'obstacles est située dans un plan sensiblement horizontal. Selon un autre mode de réalisation particulier, au moins un capteur d'obstacles est positionné à une extrémité d'un support solidaire du corps de drone situé sur une face du drone, par exemple, sur la face supérieure ou la face inférieure du drone, la position dudit au moins un capteur d'obstacles à l'extrémité du support étant telle que la direction principale de détection dudit au moins un capteur d'obstacles est située dans un plan sensiblement horizontal.

Selon un mode de réalisation particulier et illustré en Figure 1, le drone comprend un capteur d'obstacles positionné sur la face avant du corps de drone, la face avant du corps de drone étant définie par le sens principal de vol dudit drone.

Selon un mode de réalisation, le drone peut comprendre une caméra apte à capter une séquence d'images positionnée par exemple sur la partie avant du drone.

Selon un autre mode de réalisation, le drone peut comprendre en outre un support mobile 28 monté sur le corps de drone comprenant une caméra 30 apte à capter une séquence d'images.

Selon un exemple de réalisation, le drone est muni de capteurs inertiels (accéléromètres et gyromètres) permettent de mesurer avec une certaine précision les vitesses angulaires et les angles d'attitude du drone, c'est-à-dire les angles d'Euler (tangage, roulis et lacet) décrivant l'inclinaison du drone par rapport un plan horizontal d'un repère terrestre fixe.

Selon un mode de réalisation de l'invention, le drone 10 est piloté par un dispositif de pilotage distant pourvu d'un écran tactile affichant un certain nombre de symboles permettant l'activation de commandes de pilotage par simple contact du doigt d'un utilisateur sur l'écran tactile.

L'écran tactile peut également afficher l'image captée par la caméra du drone 10, avec en superposition les symboles de commande.

Le dispositif de pilotage communique avec le drone 10 via un échange bidirectionnel de données par liaison sans fil de type réseau local Wi-Fi (IEEE 802.11) ou Bluetooth (marques déposées) : du drone 10 vers le dispositif de pilotage notamment pour la transmission de l'image captée par la caméra, et du dispositif de pilotage vers le drone 10 pour l'envoi de commandes de pilotage.

Le pilotage du drone 10 consiste à faire évoluer celui-ci par :

    a) rotation autour d'un axe de tangage 22, pour le faire avance ou reculer ; et/ou
    b) rotation autour d'un axe de roulis 24, pour le déplacer vers la droite ou vers la gauche ; et/ou
    c) rotation autour d'un axe de cap, ou axe de lacet 26, pour faire pivoter vers la droite ou vers la gauche l'axe principal du drone, donc la direction de pointage de la face avant du drone ; et/ou
    d) translation vers le bas ou vers le haut par changement du régime des gaz, de manière à respectivement réduire ou augmenter l'altitude du drone.

Selon un mode de réalisation particulier, le drone transmet au dispositif de pilotage les images captées par la caméra équipant le drone de sorte que ces images sont affichées sur le dispositif de pilotage. Ainsi, l'utilisateur du drone peut piloter le drone notamment à partir des images reçues et donc commander le déplacement du drone en se basant sur les images reçues.

Selon un autre mode de réalisation, il est possible d'indiquer au drone un objet cible déterminé devant être filmé par la caméra embarquée dans le drone.

Ainsi, durant le pilotage du drone par l'utilisateur, le drone maintient la caméra orientée vers l'objet cible à filmer ou, si le drone comprend un support mobile de caméra 28, le drone commande ledit support mobile 28 afin de maintenir la visée de la caméra dans la direction de l'objet cible déterminé à filmer.

Selon un autre mode de réalisation complémentaire ou alternatif au mode de réalisation précédent, le drone comprend un mode de vol permettant un suivi d'un objet cible déterminé. Selon ce mode de réalisation, le drone suit à distance l'objet cible et détermine la position de la caméra afin que celle-ci puisse maintenir en visée l'objet cible. Dans ce mode de réalisation particulier, l'utilisateur du drone peut vouloir choisir de suivre l'objet cible à l'arrière, à l'avant ou sur un côté de l'objet cible, l'avant, l'arrière et le côté étant défini par rapport à la direction de déplacement de l'objet cible.

Au sein de ces différents modes de réalisation, la caméra est apte à capter une séquence d'images d'une cible déterminée vue depuis le drone. Pour ce faire, le drone peut comprendre des moyens aptes à adapter le support mobile 28 de la caméra de sorte que la caméra 30 capte des images de ladite cible déterminée.

Dans ces différents modes de réalisation, le drone doit être capable d'éviter tout obstacle, afin d'éviter une chute du drone qui lui serait dommageable.

Pour ce faire et conformément à l'invention, l'attitude du drone en vol va être corrigée, en particulier selon l'axe de lacet afin de maintenir le capteur d'obstacles 14 fixé directement ou indirectement sur le corps de drone dans le sens de direction de déplacement du drone ou si le drone comprend une pluralité de capteurs d'obstacles, maintenir au moins un capteur d'obstacles dans le sens de direction de déplacement du drone. Le fait de maintenir au moins un capteur d'obstacles dans la direction de déplacement du drone permet de détecter tout obstacle se trouvant dans l'environnement de vol dans la direction de vol du drone et donc incidemment de modifier la trajectoire du drone pour éviter si un obstacle venait à être détecté.

Selon un mode de réalisation particulier, le drone comprend une pluralité de capteurs d'obstacles, le capteur d'obstacles maintenu dans la direction de déplacement du drone détecte tout obstacle se trouvant dans l'environnement de vol dans la direction de vol du drone et les autres capteurs d'obstacles permettent de détecter les obstacles latéraux par rapport au déplacement du drone.

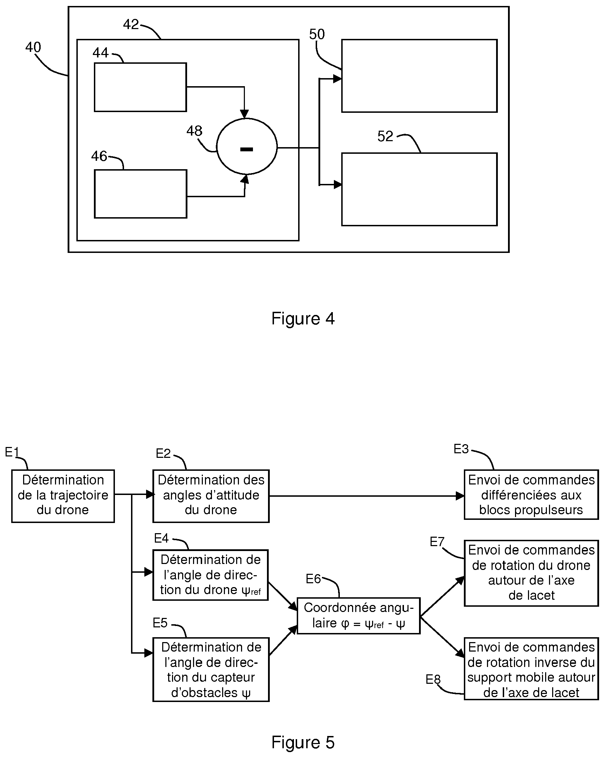

Pour cela, le drone comprend des moyens de correction 40 de l'orientation du drone aptes à corriger en lacet l'orientation du drone en vol de sorte à maintenir le capteur d'obstacles 14 dans la direction de déplacement du drone. Lesdits moyens de correction sont illustrés en figure 4 et seront détaillées ci-après.

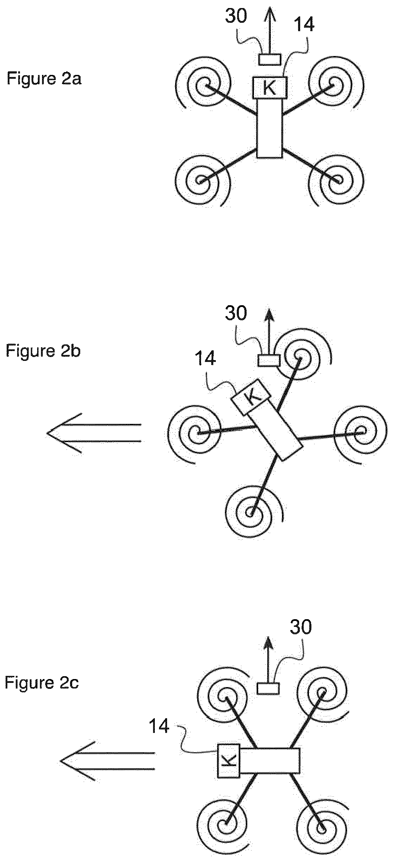

Les figures 2a, 2b et 2c illustrent la modification de l'attitude du drone lorsque le drone doit se déplacer soit latéralement sur la gauche soit effectuer une rotation sur l'axe de roulis sur la gauche.

En particulier, la figure 2a illustre la position du drone avant l'exécution d'une commande de déplacement latéral ou de roulis, le capteur d'obstacles situé sur la face avant du corps de drone se trouve dans la même direction que la visée de la caméra illustrée par une flèche.

Dès réception d'une commande de déplacement latéral ou de roulis du drone (représentée par la double flèche dirigée vers la gauche sur les figures 2b et 2c), le drone effectue une rotation selon l'axe de lacet afin d'orienter le capteur d'obstacles positionné sur la face avant du corps de drone dans la direction de déplacement du drone. La caméra est alors maintenue par exemple selon son orientation initiale de sorte à maintenir le suivi par exemple d'un objet déterminé. Ainsi la figure 2b illustre le mouvement de rotation en lacet du drone jusqu'à ce que la face avant du corps de drone soit orientée dans la direction de déplacement du drone tel que montré en figure 2c. La visée de la caméra étant maintenue sur l'objet cible, l'utilisateur du drone qui visualisera les images captées par la caméra ne subira pas les mouvements de rotation effectués par le drone en vue d'orienter le capteur d'obstacles dans la direction de déplacement du drone.

Cette solution permet ainsi de toujours orienter le ou un capteur d'obstacles dans la direction de déplacement du drone et donc permet une analyse de l'environnement de vol du drone en particulier dans la direction de déplacement du drone.

Tel qu'illustré en figure 3 et en figure 4, la correction en lacet du drone réalisée par les moyens de correction 40, consiste tout d'abord à déterminer, par des moyens de détermination 42, une coordonnée angulaire $\varphi$ du drone. Celle-ci est définie comme étant l'angle existant entre la direction de déplacement du drone $\psi_{ref}$ et la direction du capteur d'obstacles $\psi$, les différentes directions étant définies dans le repère terrestre établi avant le décollage du drone au moment de la mise sous tension du drone suivant la convention classique NED ("North, East, Down" en terminologie anglo-saxonne).

Selon un mode de réalisation particulier, la coordonnée angulaire $\varphi$ du drone est définie comme étant l'angle entre la direction commandée de déplacement du drone $\psi_{refcmd}$, cette direction commandée étant déterminée à partir d'une commande de pilotage reçue, et la direction du capteur d'obstacles $\psi$, les directions étant définies dans le repère terrestre. Conformément à l'invention, un angle déterminant la direction de déplacement du drone $\psi_{ref}$ ou la direction commandée de déplacement du drone $\psi_{refcmd}$, cette direction commandée étant déterminée à partir d'une commande de pilotage reçue, et un angle déterminant la direction du capteur d'obstacles $\psi$ sont déterminées dans le repère terrestre selon la convention NED, par exemple par rapport au Nord dans ledit repère, par des moyens de détection de la direction de déplacement du drone 44 et des moyens de détection de la direction du capteur d'obstacles 46, lesdits moyens de détection sont, selon un mode de réalisation, compris dans les moyens de détermination d'une coordonnée angulaire du drone 42. Selon un mode de réalisation particulier d'un drone comprenant une pluralité de capteurs d'obstacles, un angle déterminant la direction de chaque capteur d'obstacles est déterminé.

Selon un mode de réalisation, les moyens de détection de la direction de déplacement du drone 44 et de la direction du capteur d'obstacles 46 ou de chacun des capteurs d'obstacles sont aptes à déterminer l'angle déterminant la direction de déplacement du drone et l'angle déterminant la direction du ou des capteur(s) d'obstacles dans le repère terrestre (NED), par exemple par rapport au Nord dans ledit repère.

Selon un mode de réalisation particulier, la coordonnée angulaire $\varphi$ comprend la soustraction, réalisée par un moyen de soustraction 48, de l'angle déterminant la direction de déplacement du drone $\psi_{ref}$ et de l'angle déterminant la direction du capteur d'obstacles $\psi$.

Selon le mode de réalisation dans lequel le drone comprend une pluralité de capteurs d'obstacles, la coordonnée angulaire $\varphi$ comprend la valeur de la soustraction la plus petite en valeur absolue de l'ensemble des soustractions réalisées par ledit moyen de soustraction 48 de l'angle déterminant la direction de déplacement du drone $\psi_{ref}$ avec respectivement chaque angle déterminant la direction d'un capteur d'obstacles.

Le drone comprend en outre des moyens d'actions correctrices 50 aptes à commander en rotation le drone selon l'axe de lacet dudit drone, la rotation étant fonction de la coordonnée angulaire $\varphi$ déterminée, permettant d'aligner la direction du capteur d'obstacles sur la direction de déplacement du drone.

Pour ce faire, le système intégré de navigation et de contrôle d'attitude du drone va générer une ou des commandes différenciées à partir de la coordonnée angulaire $\varphi$ déterminée et va les envoyer à un ou plusieurs des blocs propulseurs 12 du drone de manière à produire la rotation du drone.

L'envoi d'une ou plusieurs commandes différenciées comprend par exemple la génération de valeurs de consigne d'angle en lacet et l'application de ces valeurs de consigne à une boucle d'asservissement de contrôle des moteurs du drone.

Selon un mode de réalisation particulier, les moyens d'actions correctrices 50 sont aptes à commander en rotation le drone selon l'axe de lacet dudit drone et à commander en rotation le drone selon l'axe de tangage et/ou de roulis.

En outre, selon un mode de réalisation particulier, le drone comprend des moyens de correction inverse 52 de l'orientation du support mobile 28 qui sont aptes à corriger en lacet l'orientation du support mobile 28 de sorte à maintenir la caméra conformément à sa direction avant d'effectuer les actions correctrices sur ledit drone.

En effet, l'invention consiste à corriger durant le vol la direction de visée d'un dudit au moins un capteur d'obstacles par une rotation du drone afin que la direction de visée du capteur d'obstacles soit toujours dans la direction de déplacement du drone. Il est important dans ce contexte, de corriger le support mobile 28 de la caméra afin de ne pas répercuter la correction opérée sur le drone sur le support mobile mais au contraire avoir une correction sensiblement inverse du support de camera afin que la caméra 30 maintienne sa visée par exemple sur l'objet cible à filmer. Pour ce faire, les moyens de correction inverse 52 de l'orientation du drone comprennent des moyens d'actions sur le support mobile aptes à commander en rotation le support mobile 28 selon la coordonnée angulaire inverse $(-\varphi)$ déterminée permettant de maintenir la direction de la caméra 30 dans sa direction de visée c'est-à-dire la direction préalable aux actions correctrices effectuées sur ledit drone.

Il va être maintenant décrit les différentes étapes du procédé mis en oeuvre dans le drone afin de contrôler dynamiquement l'attitude du drone et en particulier déterminer les commandes différenciées à envoyer à un ou plusieurs blocs propulseurs 12 du drone afin de maintenir le capteur d'obstacles dudit drone dans la direction de déplacement du drone.

Le procédé de contrôle dynamique est illustré en Figure 5.

Le procédé comprend une étape E1 de détermination de la trajectoire du drone. Selon le mode de navigation du drone, la trajectoire est déterminée soit en fonction des commandes reçues de l'utilisateur soit en fonction des mouvements de l'objet cible à suivre.

L'étape E1 est suivie de l'étape E2 de détermination des angles d'attitude du drone à modifier afin de suivre la trajectoire déterminée et de la génération de valeurs de consigne d'angle de rotation du drone selon les différents angles d'attitude du drone déterminés.

L'étape E2 est suivie de l'étape E3 d'envoi d'une ou plusieurs commandes différenciées déterminées en fonction des angles d'attitudes déterminés à un ou plusieurs desdits blocs propulseurs 12 du drone pour contrôler l'attitude dudit drone.

L'étape E3 d'envoi d'une ou plusieurs commandes différenciées comprend par exemple la génération de valeurs de consigne d'angle et l'application de ces valeurs de consigne à une boucle d'asservissement de contrôle des moteurs du drone.

L'étape E1 est aussi suivie de l'étape E4, qui peut être exécutée parallèlement à l'étape E2, de détermination de la direction de déplacement du drone à partir de la trajectoire déterminée. Au cours de cette étape, il est déterminé l'angle déterminant la direction de déplacement du drone $\psi_{ref}$ dans le repère terrestre (NED).

L'étape E1 peut aussi être suivie de l'étape E5, qui peut être exécutée parallèlement à l'étape E2 et/ou de l'étape E4, de détermination de la direction du capteur d'obstacles. Au cours de cette étape, il est déterminé l'angle déterminant la direction du capteur d'obstacles $\psi$ dans le repère terrestre (NED).

Les étapes E4 et E5 sont suivies d'une étape E6 de détermination d'une coordonnée angulaire $\varphi$ définie entre la direction de déplacement du drone et la direction du capteur d'obstacles. Pour ce faire, il est déterminé la coordonnée angulaire $\varphi$ par la soustraction à l'angle déterminant la direction de déplacement du drone $\psi_{ref}$, l'angle déterminant la direction du capteur d'obstacles $\psi$. En effet, la coordonnée angulaire $\varphi$ est définie de la manière suivante :

$$\varphi = \psi_{ref} - \psi$$

L'étape E6 est suivie d'une étape E7 d'envoi de commandes différenciées déterminées en fonction de la coordonnée angulaire $\varphi$ déterminée à un ou plusieurs desdits blocs propulseurs 12 du drone pour modifier la rotation selon l'axe de lacet dudit drone et donc permettre une rotation du drone de sorte à maintenir le capteur d'obstacles dans la direction de déplacement du drone.

L'étape E7 d'envoi d'une ou plusieurs commandes différenciées comprend par exemple la génération de valeurs de consigne d'angle en lacet et l'application de ces valeurs de consigne à une boucle d'asservissement de contrôle des moteurs du drone.

Selon un mode de réalisation dans lequel le drone comprend un support mobile 28 monté sur le corps de drone 16 comprenant une caméra 30, le procédé comprend en outre une étape E8 qui suit l'étape E6 d'envoi de commandes de correction inverse à celle du drone audit support mobile 28 de sorte à ne pas faire subir une rotation de l'image visée par la caméra 30. En effet, au cours de cette étape, le drone effectue une rotation en lacet d'un angle $\varphi$ déterminé et le support mobile doit effectuer une rotation en sens inverse c'est-à-dire $-\varphi$ afin de maintenir la caméra dans sa direction de visée.

Les commandes de correction de la rotation en lacet du drone et la commande de correction inverse de la rotation en lacet du support mobile doivent être réalisées de manière synchronisée afin de maintenir la caméra dans sa direction de visée, notamment afin d'éviter tout mouvement non désiré dans la succession d'images formant le film de la cible.

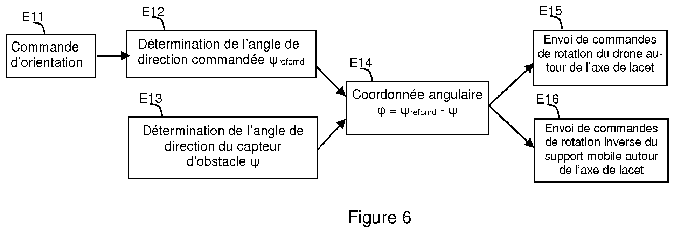

Selon un autre mode de réalisation du procédé de contrôle dynamique illustré en Figure 6, ledit procédé réalise une correction de la direction du drone dès la réception d'une commande de pilotage, et à partir des informations contenues dans ladite commande de pilotage (et non pas à partir de la trajectoire déterminée du drone), à savoir l'information de changement d'attitude, en particulier l'indication d'une rotation sur l'axe de roulis ou d'un déplacement latéral commandé.

Ledit procédé comprend une étape E11 de réception d'une commande de pilotage en vue de modifier l'attitude du drone.

L'étape E11 est suivie de l'étape E12 de détermination de l'angle de direction commandée de déplacement du drone, cette direction commandée étant déterminée à partir de la commande de pilotage reçue. Au cours de cette étape, il est déterminé l'angle déterminant la direction commandée de déplacement du drone $\psi_{refcmd}$ dans le repère terrestre (NED).

L'étape E11 peut être aussi suivie de l'étape E13, qui peut être exécutée parallèlement à l'étape E12, de détermination de la direction du capteur d'obstacles. Au cours de cette étape, il est déterminé l'angle déterminant la direction du capteur d'obstacles $\psi$ dans le repère terrestre (NED).

Les étapes E12 et E13 sont suivies d'une étape E14 de détermination d'une coordonnée angulaire $\varphi$ définie entre la direction commandée de déplacement du drone et la direction du capteur d'obstacles. Pour ce faire, il est déterminé la coordonnée angulaire $\varphi$ par la soustraction à l'angle déterminant la direction commandée de déplacement du drone $\psi_{refcmd}$, l'angle déterminant la direction du capteur d'obstacles $\psi$. En effet, la coordonnée angulaire $\varphi$ est définie de la manière suivante :

$$\varphi = \psi_{refcmd} - \psi$$

L'étape E14 est suivie d'une étape E15 d'envoi de commandes différenciées déterminées en fonction de la coordonnée angulaire $\varphi$ déterminée à un ou plusieurs desdits blocs propulseurs 12 du drone pour modifier la rotation selon l'axe de lacet dudit drone et donc permettre une rotation du drone de sorte à maintenir le capteur d'obstacles dans la direction de déplacement du drone.

L'étape E15 d'envoi d'une ou plusieurs commandes différenciées comprend par exemple la génération de valeurs de consigne d'angle en lacet et l'application de ces valeurs de consigne à une boucle d'asservissement de contrôle des moteurs du drone.

Selon un mode de réalisation dans lequel le drone comprend un support mobile 28 monté sur le corps de drone 16 comprenant une caméra 30, le procédé comprend en outre une étape E16 qui suit l'étape E14 d'envoi de commandes de correction inverse à celle du drone audit support mobile 28 de sorte à ne pas faire subir une rotation de l'image visée par la caméra 30. En effet, au cours de cette étape, le drone effectue une rotation en lacet d'un angle $\varphi$ déterminé et le support mobile doit effectuer une rotation en sens inverse c'est-à-dire $-\varphi$ afin de maintenir la caméra dans sa direction de visée.

Les commandes de correction de la rotation en lacet du drone et la commande de correction inverse de la rotation en lacet du support mobile doivent être réalisées de manière synchronisée afin de maintenir la caméra dans sa direction de visée, notamment afin d'éviter tout mouvement non désiré dans la succession d'images formant le film de la cible.

## Revendications

**1.** Drone à voilure tournante (10) comprenant

    - un corps de drone (16) comprenant une carte électronique contrôlant le pilotage du drone et une pluralité de bras de liaison,
    - une pluralité de blocs propulseurs (12) montés sur des bras de liaison (18) respectifs,
    - au moins un capteur d'obstacles (14) solidaire du corps de drone, dont la direction principale de détection est située dans un plan sensiblement horizontal,

    **caractérisé en ce que** le drone comprend des moyens de correction (40) de l'orientation du drone aptes à corriger en lacet l'orientation du drone en vol de sorte à maintenir un dudit au moins un capteur d'obstacles dans la direction de déplacement du drone.

**2.** Drone selon la revendication précédente, **caractérisé en ce que** les moyens de correction de l'orientation du drone comprennent :

    - des moyens de détermination d'une coordonnée angulaire (42) définie entre une direction de déplacement du drone et une direction du capteur d'obstacles et
    - des moyens d'actions correctrices (50) aptes à commander en rotation le drone selon l'axe de lacet dudit drone, la rotation étant fonction de la coordonnée angulaire déterminée, permettant d'aligner la direction du capteur d'obstacles sur la direction de déplacement du drone.

**3.** Drone selon la revendication précédente, **caractérisé en ce que** les moyens d'actions correctrices (50) comprennent en outre des moyens aptes à agir en rotation selon l'axe de roulis et/ou selon l'axe de tangage afin de maintenir la direction du capteur d'obstacles dans la direction de déplacement du drone.

**4.** Drone selon la revendication 2 ou la revendication 3, **caractérisé en ce que** les moyens de détermination d'une coordonnée angulaire (42) comprennent des moyens de détection de la direction de déplacement du drone (44) et des moyens de détection de la direction du capteur d'obstacles (46).

**5.** Drone selon la revendication 4, **caractérisé en ce que** les moyens de détection de la direction de déplacement du drone (44) sont aptes à déterminer l'angle déterminant la direction de déplacement du drone $\psi_{ref}$ dans le repère terrestre (NED) ou l'angle déterminant une direction commandée de déplacement du drone $\psi_{refcmd}$ dans le repère terrestre (NED), ladite direction commandée étant déterminée à partir d'une commande de pilotage reçue par le drone.

**6.** Drone selon l'une quelconque des revendications 4 ou 5, **caractérisé en ce que** les moyens de détection de la direction du capteur d'obstacles (46) sont aptes à déterminer l'angle déterminant la direction du capteur d'obstacles $\psi$ dans le repère terrestre (NED).

**7.** Drone selon les revendications 5 et 6, **caractérisé en ce que** les moyens de détermination de ladite coordonnée angulaire (42) comprennent un moyen de soustraction (48) de l'angle déterminant le déplacement du drone ou l'angle déterminant la direction commandée de déplacement du drone et de l'angle déterminant la direction du capteur d'obstacles.

**8.** Drone selon l'une quelconque des revendications précédentes, **caractérisé en ce que** le drone comprend en outre un support mobile (28) monté sur le corps de drone (16) comprenant une caméra (30) apte à capter une séquence d'images et des moyens de correction inverse (52) de l'orientation du support mobile aptes à corriger en lacet l'orientation du support de sorte à maintenir la caméra dans sa direction de visée .

**9.** Drone selon la revendication 8, **caractérisé en ce que** les moyens de correction inverse de l'orientation du drone comprennent des moyens d'actions sur le support mobile aptes à commander en rotation le support mobile selon la coordonnée angulaire inverse déterminée permettant de maintenir la direction de la caméra dans sa direction de visée.

**10.** Procédé de contrôle dynamique d'attitude d'un drone à voilure tournante (10) comprenant un corps de drone (16), une pluralité de bras de liaison (18), une pluralité de blocs propulseurs (12) montés sur des bras de liaison (18) respectifs et au moins un capteur d'obstacles (14) solidaire du corps de drone, dont la direction principale de détection est située dans un plan sensiblement horizontal, **caractérisé en ce que** lorsque le drone vole, l'attitude du drone est contrôlée par l'envoi de commandes de correction de l'orientation du drone à un ou plusieurs desdits blocs propulseurs pour corriger en lacet l'orientation du drone en vol de sorte à maintenir un dudit au moins un capteur d'obstacles dans la direction de déplacement du drone.

**11.** Procédé de contrôle dynamique selon la revendication précédente, **caractérisé en ce que** le procédé comprend :

- une étape de détermination d'une coordonnée angulaire définie entre une direction de déplacement du drone et une direction du capteur d'obstacles et
- une étape d'envoi de commande en rotation du drone selon l'axe de lacet dudit drone, la rotation étant fonction de la coordonnée angulaire déterminée, permettant d'aligner la direction du capteur d'obstacles sur la direction de déplacement du drone.

**12.** Procédé de contrôle dynamique selon la revendication précédente, **caractérisé en ce que** le procédé comprend en outre une étape de détection de la direction de déplacement du drone et une étape de détection de la direction du capteur d'obstacles.

**13.** Procédé de contrôle dynamique selon la revendication précédente, **caractérisé en ce que** ladite coordonnée angulaire est obtenue à partir de la direction de déplacement du drone et de la direction du capteur d'obstacles.

**14.** Procédé de contrôle dynamique selon la revendication précédente, **caractérisé en ce que** le drone comprend en outre un support mobile (28) monté sur le corps de drone (16) comprenant une caméra (30) apte à capter une séquence d'images depuis le drone et le procédé comprend en outre une étape de correction inverse de l'orientation du support mobile pour corriger en lacet l'orientation du support de sorte à maintenir la caméra dans sa direction de visée .

Figure 1

Figure 3

Figure 2a

30    14

Figure 2b

30

14

Figure 2c

30

14

Figure 4

Figure 5

E11

Commande
d'orientation

E12

Détermination de l'angle de
direction commandée $\psi_{refcmd}$

E13

Détermination de l'angle de
direction du capteur
d'obstacle $\psi$

E14

Coordonnée angulaire
$\varphi = \psi_{refcmd} - \psi$

E15

Envoi de commandes
de rotation du drone autour de l'axe de lacet

E16

Envoi de commandes
de rotation inverse du
support mobile autour
de l'axe de lacet

Figure 6

**Europäisches Patentamt**
**European Patent Office**
**Office européen des brevets**

# RAPPORT DE RECHERCHE EUROPEENNE

Numéro de la demande

EP 17 18 2241

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Anonymous: "PHANTOM 4 User Manual v1.0", , 14 mars 2016 (2016-03-14), pages 1-65, XP055345614, Shenzhen, China Extrait de l'Internet: URL:https://dl.djicdn.com/downloads/phantom_4/en/Phantom_4_User_Manual_en_v1.0.pdf [extrait le 2017-02-14] * Sections "Aircraft diagram", "Active track", "Obstacle and Vision Positioning System" and "Detection Range" * ----- | 1-14 | INV. G08G5/00 B64C39/02 G05D1/00 G05D1/10 G08G5/04 |
| X | EP 2 364 757 A1 (PARROT [FR]) 14 septembre 2011 (2011-09-14) * alinéas [0042] - [0050] * * alinéas [0056] - [0064] * ----- | 1-14 | |
| X | US 9 387 927 B2 (RISCHMULLER MICHAEL [FR] ET AL) 12 juillet 2016 (2016-07-12) * colonne 4, ligne 32 - colonne 5, ligne 63 * * colonne 6, lignes 30-61 * ----- | 1-14 | DOMAINES TECHNIQUES RECHERCHES (IPC) G08G B64C G05D |

Le présent rapport a été établi pour toutes les revendications

| Lieu de la recherche | Date d'achèvement de la recherche | Examinateur |
|---|---|---|
| La Haye | 8 décembre 2017 | Tanguy Michotte |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 17 18 2241

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-12-2017

| Document brevet cité au rapport de recherche | | Date de publication | Membre(s) de la famille de brevet(s) | | Date de publication |
|---|---|---|---|---|---|
| EP 2364757 | A1 | 14-09-2011 | AT | 556755 T | 15-05-2012 |
| | | | CN | 102266672 A | 07-12-2011 |
| | | | EP | 2364757 A1 | 14-09-2011 |
| | | | FR | 2957266 A1 | 16-09-2011 |
| | | | HK | 1164202 A1 | 29-01-2016 |
| | | | JP | 6037600 B2 | 07-12-2016 |
| | | | JP | 2011189929 A | 29-09-2011 |
| | | | US | 2011221692 A1 | 15-09-2011 |
| US 9387927 | B2 | 12-07-2016 | FR | 3000813 A1 | 11-07-2014 |
| | | | US | 2015149000 A1 | 28-05-2015 |

EPO FORM P0460

Pour tout renseignement concernant cette annexe : voir Journal Officiel de l'Office européen des brevets, No.12/82